# EUROPÄISCHE PATENTANMELDUNG

(11) **EP 0 739 113 A2**
(43) Veröffentlichungstag der Anmeldung: **23.10.1996**
(21) Anmeldenummer: 96104915.2
(22) Anmeldetag: 28.03.1996
(51) Int. Cl.: H04L 12/56, H04Q 11/04

(54) **Verfahren zum Betreiben eines Fernmeldenetzes sowie Netzzugangs-Vermittlungsstelle und Durchgangs-Vermittlungsstelle**

(30) Priorität: 18.04.1995 DE 19513564
(71) Anmelder: Alcatel SEL Aktiengesellschaft, D-70435 Stuttgart (DE)
(72) Erfinder: Eilenberger, Gert, Dr., 73230 Kirchheim (DE); Bunse, Stephan, 70565 Stuttgart (DE)
(74) Vertreter: Brose, Gerhard, Dipl.-Ing.

(57) **Zusammenfassung**

- Stand der Technik:: Hierarchisches Fernmeldenetz, in dem jede Verbindung über mehrere Netzknoten zum Empfänger hin vermittelt wird.
- Technisches Problem:: Zunehmende Schwierigkeiten bei steigender Übertragungsgeschwindigkeit.
- Grundgedanke:: Vermaschung aller Teilnehmervermittlungsstellen des Netzes durch virtuelle Pfade. Jeder virtuelle Pfad wird durch Folge von "Supercontainern" realisiert, deren Inhalt transparent übertragen wird. Nur die jeden "Supercontainer" begleitende Steuerinformation ist genormt und wird ausgewertet.
- Beispiel:: Gesamtes Netz wird wie eine einzelne mehrstufige Vermittlungsstelle behandelt. Vermittlung in den einzelnen Stufen (Vermittlungsstellen) durch Raum- und Frequenzumsetzung (SF1, ..., SFN). In der Ausgangsstufe (Ziel-Teilnehmervermittlungsstelle) zusätzlich Zeitumsetzung (STF1, ..., STFN). Nur in den Teilnehmervermittlungsstellen (Netzzugänge) verbindungsindividuelle Behandlung der Datenströme.
- Vorteil:: Auch bei höchsten Übertragungsgeschwindigkeiten kann serieller (Nutz-)Datenstrom beibehalten werden. Zeitlagenumsetzung nur beim Verlassen des Netzes erforderlich. Für durchgehend optische Übermittlung geeignet.

## Beschreibung

Die Erfindung betrifft ein Verfahren zum Betreiben eines Fernmeldenetzes nach dem Oberbegriff des Anspruchs 1, eine Netzzugangs-Vermittlungsstelle nach dem Oberbegriff des Anspruchs 7 und eine Durchgangs-Vermittlungsstelle nach dem Oberbegriff des Anspruchs 8.

Im heutigen hierarchischen Fernmeldenetz wird für jede Verbindung zwischen einem ersten und einem zweiten Teilnehmer über mehrere Vermittlungsstellen oder Netzknoten ein eigener Übertragungskanal geschaltet. Dies kann auch teilstreckenweise verschieden, z.B. ein synchroner Zeitmultiplexkanal oder auch ein virtueller ATM-Kanal sein.

In jeder Vermittlungsstelle muß nun bitgenau auf jeden einzelnen Übertragungskanal zugegriffen werden können. Dies wird umso schwieriger, je höher die Übertragungsgeschwindigkeit wird. In der optischen Übertragungstechnik sind bald Übertragungsgeschwindigkeiten von mehr als 10 Gigabit/s zu erwarten. Zur Verarbeitung solcher Datenströme, insbesondere zur Adressauswertung und zur Zeitlagenumsetzung, werden diese deshalb durch Demultiplexen in Teildatenströme aufgeteilt und diese wiederum durch Serien-Parallel-Wandlung in langsamere Datenströme umgewandelt, letztlich also sehr stark parallelisiert. Andererseits sind alle Voraussetzungen gegeben, um optische Datenströme zu verstärken, zwischen zwei Wegen zu schalten oder zwischen zwei Frequenzen oder Wellenlängen umzusetzen.

Hier schafft die Erfindung Abhilfe durch ein Verfahren nach der Lehre des Anspruchs 1, eine Netzzugangs-Vermittlungsstelle nach der Lehre des Anspruchs 7 und eine Durchgangs-Vermittlungsstelle nach der Lehre des Anspruchs 8.

Der Grundgedanke hierbei ist, alle Teilnehmervermittlungsstellen des Netzes durch virtuelle Pfade zu vermaschen. Jeder virtuelle Pfad wird durch eine Folge von "Supercontainern" realisiert, deren Inhalt transparent übertragen wird. Nur die jeden "Supercontainer" begleitende Steuerinformation ist genormt und wird ausgewertet. Wo dieses Netz nicht bis zum Teilnehmer reicht, ist anstelle der Teilnehmervermittlungsstelle die Netzzugangs-Vermittlungsstelle zu sehen.

Letztlich werden hier die Teilnehmervermittlungsstellen so miteinander verbunden, wie bei ATM (Asynchronous Transfer Mode) die einzelnen Teilnehmer. Es werden Datenpakete gebildet, hier Supercontainer genannt, die einen Paketkopf und einen Informationsteil aufweisen. Der Informationsteil wird transparent durchgeschaltet, er kann beispielsweise eine Vielzahl von ATM-Zellen aufweisen, die von Teilnehmern im Bereich der Ausgangs-Teilnehmervermittlungsstelle kommen und für Teilnehmer der Ziel-Teilnehmervermittlungsstelle bestimmt sind. Der Paketkopf trägt die Information, die erforderlich ist, um den jeweiligen Supercontainer zur Zielvermittlungsstelle zu leiten. Die Übertragungsgeschwindigkeit im Paketkopf kann geringer sein als die im Informationsteil. Damit ist es möglich, einerseits im Informationsteil höchste Datenmengen zu übertragen, andererseits die Steuerinformation im Paketkopf mit geringem Aufwand in jeder Vermittlungsstufe online zu verarbeiten.

Die Paketköpfe müssen nicht zwingend mit den zugehörigen Informationsteilen nach Art von ATM-Zellen verbunden sein. Auch andere Arten der Zuordnung sind möglich. Sofern die Informationsteile nicht zwischengespeichert werden sollen, ist zumindest sicherzustellen, daß die Paketköpfe oder entsprechende Adressdaten-Datenblöcke den Informationsteilen als den Nutzdaten-Datenblöcken vorausgehen.

Bei der angestrebten optischen Übermittlung werden mehrere parallellaufende Übertragungswege durch Wellenlängenmultiplex verwendet. Es ist möglich, hier einen dieser Übertragungswege, d.h. eine Wellenlänge, in Zeitschlitze einzuteilen und diese je einem der übrigen Übertragungswege zuzuteilen. Die Informationsteile werden dann mit je einer Wellenlänge übertragen, die Paketköpfe dazu im Zeitmultiplex auf einer gemeinsamen weiteren Wellenlänge. Auch ist es denkbar, je ein Paar aus breitbandigem und schmalbandigem Übertragungskanal mit getrennten Wellenlängen zusammenzufassen und für Informationsteile einerseits und Paketköpfe andererseits zu verwenden. Die Verwendung getrennter Übertragungswege für Paketköpfe und Informationsteile kann die Auswertung der Adressen und anderer Steuerdaten erleichtern. Allerdings ist dann für die getrennte Vermittlung auch dieser Daten und für eine eindeutige Zuordnung Sorge zu tragen.

Auch ein etwas größerer, wenn auch eindeutiger Abstand zwischen Paketkopf und Informationsteil ist denkbar, um Verarbeitungsgeschwindigkeit in den Vermittlungsstellen und hohe Übertragungsgeschwindigkeit aneinander anzupassen. Der Abstand kann zum Beispiel durch ein Informationsteil eines vorausgehenden und den Paketkopf eines nachfolgenden Pakets ausgefüllt sein.

Die erfindungsgemäße Ausgestaltung der Vermittlungsstellen und der erfindungsgemäße Betrieb des Netzes haben den Vorteil, daß auch bei höchsten Übertragungsgeschwindigkeiten der serielle Nutzdatenstrom beibehalten werden kann. Zeitlagenumsetzungen sind innerhalb des Netzes nicht erforderlich, wenn an jeder Stelle immer auf einen alternativen Weg geschaltet werden kann. Damit ergibt sich die Eignung für durchgehend optische Vermittlung.

Ein weiterer wesentlicher Vorteil ergibt sich daraus, daß ein bitgenaues Synchronisieren nicht erforderlich ist. Im Prinzip könnte auf jegliches Synchronisieren verzichtet werden, wenn immer ausreichend viele alternative Wege zur Verfügung stünden. Auch die Längen der Informationsteile könnten beliebig lang sein.

Eine bessere Ausnutzung der Kapazitäten ergibt sich jedoch, wenn feste Zeitschlitze verwendet werden. Es genügt jedoch, einen Supercontainer derart in diesen Zeitschlitz einzufügen, daß zum vorrangehenden und nachfolgenden Supercontainer ein Sicherheitsabstand (guard time) eingehalten wird. Der Sicherheitsabstand muß nur so groß sein, um Überlappungen durch nicht mehr ausgleichbare Laufzeitschwankungen zu verhindern und außerdem ein sicheres Umschalten zwischen zwei Supercontainern zu ermöglichen. Der verbliebene Rest des Zeitschlitzes sollte natürlich weitgehend ausgenützt werden, um die Übertragungskapazität so weit wie möglich zu nutzen.

Synchronisationsmaßnahmen sind deshalb nur in dem Maß erforderlich, um diesen Sicherheitsabstand zu gewährleisten und gleichzeitig die Adressen noch sicher lesen und auswerten zu können. Solche Synchronisationsmaßnahmen sind, auch im optischen Bereich, beispielsweise mit schaltbaren Verzögerungsgliedern, einfach durchzuführen.

Derzeit wird daran gedacht, einen Supercontainer so zu gestalten, daß die Nutzdaten jeweils einen sogenanten VC-4-Container nach der SDH-Hierarchie enthalten.

Eine Vielzahl alternativer Übertragungswege erhält man bevorzugt durch Verwendung eines Wellenlängenmultiplex auf jeder Übertragungsstrecke. Aber auch die Wegevielfalt selbst kann genutzt werden.

Im folgenden wird die Erfindung anhand eines Ausführungsbeispiels unter Zuhilfenahme der bei liegenden Zeichnung weiter erläutert.

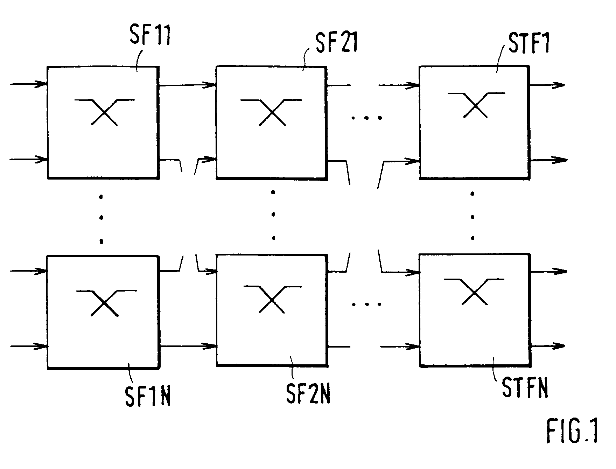

- Fig. 1: zeigt ein Fernmeldenetz mit erfindungsgemäß ausgestalteten Netzzugangs- und Durchgangs-Vermittlungsstellen.

Das Fernmeldenetz nach Fig. 1 enthält Netzzugangs-Vermittlungsstellen SF11, ..., SF1N und STF1, ... STFN sowie Durchgangs-Vermittlungsstellen SF21, ..., SF2N. Die Darstellung nach Fig. 1 zeigt nur eine Übertragungsrichtung. Selbstverständlich hat jede Vermittlungsstelle auch in der Gegenrichtung entsprechende Funktionen.

In Fig. 1 wird das gesamte Fernmeldenetz wie eine einzige Vermittlungsstelle dargestellt. Die Darstellung ist auch der Beschreibung einer Vermittlungsstelle entnommen. Diese Beschreibung ist veröffentlicht als deutsche Offenlegungsschrift DE 42 09 790 A1, als europäische Patentanmeldung 0 568 794 A2 und als US-Patent 5,369,514. Auf den Inhalt dieser Schriften wird ausdrücklich Bezug genommen. Tatsächlich wird gemäß der vorliegenden Erfindung das gesamte Fernmeldenetz wie eine große Vermittlungsstelle angesehen, wobei dann die Vermittlungsstellen selbst wie die einzelnen Vermittlungsstufen angesehen werden. Der innere Aufbau einer Vermittlungsstelle kann prinzipiell gleich sein.

Das gesamte Netz wird nicht den regelmäßigen Aufbau einer Vermittlungsstelle aufweisen. Vorgesehen sind aber überall Raumlagenumsetzer S, die als optische Schalter realisierbar sind, und Frequenzlagen- oder Wellenlängenumsetzer F, die heute ebenfalls bereits als optische Bauelemente realisierbar sind. Nur in der allerletzten Vermittlungsstufe vor dem Verlassen des Netzes sind auch Zeitlagenumsetzer T vorgesehen. Beim Eingang in das Netz und beim Verlassen des Netzes sind die einzelnen verbindungsindividuellen Datenströme ohnehin vom Datenformat im Anschlußbereich an den des Netzes und umgekehrt anzupassen. Dabei sind auf jeden Fall auch Zwischenspeicherungen, Zeitlagenumsetzungen und Änderungen der Übertragungsgeschwindigkeit erforderlich. Hierfür sind zunächst bekannte Maßnahmen wie in der herkömmlichen Vermittlungstechnik vorgesehen.

Für weitere Einzelheiten wird auf die oben genannten Schriften verwiesen.

## Patentansprüche

1. Verfahren zum Betreiben eines Fernmeldenetzes, das eine Vielzahl von Netzzugangs-Vermittlungsstellen und eine Vielzahl von Durchgangs-Vermittlungsstellen aufweist und bei dem jede Netzzugangs-Vermittlungsstelle direkt oder über eine beliebige Anzahl von Durchgangs-Vermittlungsstellen mit jeder anderen Netzzugangs-Vermittlungsstelle und mit einer Vielzahl von Netzzugangskanälen verbunden ist,
**dadurch gekennzeichnet,** daß in jeder Netzzugangs-Vermittlungsstelle von den Netzzugangskanälen dieser Netzzugangs-Vermittlungsstelle kommende Nutzdaten derart zu Datenblöcken zusammengefaßt werden, daß jeder Datenblock nur Nutzdaten enthält, die für Netzzugangskanäle einer einzigen Ziel-Netzzugangs-Vermittlungsstelle bestimmt sind, daß den Nutzdaten innerhalb des jeweiligen Datenblocks Steuerdaten zugeordnet sind, um die Nutzdaten am Ziel einem ausgewählten Netzzugangskanal zuzuordnen, daß jedem Datenblock mit Nutzdaten ein Datenblock mit Adressdaten zugeordnet ist und daß jeder Nutzdaten-Datenblock innerhalb einer jeden Vermittlungsstelle aufgrund der Adressdaten des zugeordneten Adressdaten-Datenblocks transparent in Richtung Ziel-Netzzugangs-Vermittlungsstelle vermittelt wird.

2. Verfahren nach Anspruch 1, dadurch gekennzeichnet, daß die Nutzdaten ATM-Zellen sind, denen im jeweiligen Zellkopf Steuerdaten zugeordnet sind.

3. Verfahren nach Anspruch 1, dadurch gekennzeichnet, daß je ein Nutzdaten-Datenblock und der zugeordnete Adressdaten-Datenblock nach Art eines Datenpakets aufeinanderfolgen, wobei der Adressdaten-Datenblock als Paketkopf vorangeht.

4. Verfahren nach Anspruch 1, dadurch gekennzeichnet, daß die Nutzdaten-Datenblöcke und die zugeordneten Adressdaten-Datenblöcke auf getrennten, parallel laufenden Übertragungswegen übertragen werden und daß sich die Zuordnung durch das gegenseitige zeitliche Auftreten und die Zuordnung der Übertragungswege ergibt.

5. Verfahren nach Anspruch 1, dadurch gekennzeichnet, daß Synchronisationsmaßnahmen in dem Umfang ergriffen werden, der erforderlich ist, um einerseits die Datenblöcke ohne Überlappung und ohne nennenswerte Verschwendung von Übertragungskapazität aufeinander folgen zu lassen und andererseits die Adressdaten lesen und auswerten zu können.

6. Verfahren nach Anspruch 1, dadurch gekennzeichnet, daß zu jedem Übertragungsweg mindestens ein alternativer Übertragungsweg geschaltet werden kann.

7. Netzzugangs-Vermittlungsstelle, insbesondere Teilnehmervermittlungsstelle, mit einer Vielzahl von Anschlüssen für Netzzugangskanäle, insbesondere Teilnehmeranschlußleitungen, und mit wenigstens einem Anschluß für eine Verbindungsleitung zu einer Durchgangs-Vermittlungsstelle,
**dadurch gekennzeichnet,** daß Mittel vorhanden sind, um von den Netzzugangskanälen kommende Nutzdaten derart zu Datenblöcken zusammenzufassen, daß jeder Datenblock nur Nutzdaten enthält, die für Netzzugangskanäle einer einzigen weiteren Netzzugangs-Vermittlungsstelle bestimmt sind und daß den Nutzdaten innerhalb des jeweiligen Datenblocks Steuerdaten zugeordnet sind, um die Nutzdaten am Ziel einem ausgewählten Netzzugangskanal zuzuordnen, und daß die Mittel weiter dazu geeignet sind, jedem Datenblock mit Nutzdaten einen Datenblock mit Adressdaten zuzuordnen, daß Mittel vorhanden sind, um Nutzdaten-Datenblöcke und Adressdaten-Datenblöcke über einen Anschluß für eine Verbindungsleitung zu einer Durchgangs-Vermittlungsstelle zu übertragen und daß Mittel vorhanden sind, um von einem Anschluß für eine Verbindungsleitung kommende Nutzdaten-Datenblöcke und Adressdaten-Datenblöcke zu empfangen und die darin enthaltenen Nutzdaten aufgrund der zugeordneten Steuerdaten über denjenigen Anschluß auszugeben, der dem ausgewählten Netzzugangskanal zugeordnet ist.

8. Durchgangs-Vermittlungsstelle mit Anschlüssen für je eine Verbindungsleitung zu einer anderen Vermittlungsstelle,
**dadurch gekennzeichnet,** daß Mittel vorhanden sind, um von einer Verbindungsleitung kommende Adressdaten-Datenblöcke auszuwerten und diese zusammen mit zugeordneten Nutzdaten-Datenblöcken zu einem anderen Anschluß für eine Verbindungsleitung zu vermitteln.
